# EUROPEAN PATENT APPLICATION

(11) **EP 3 404 792 A1**
(43) Date of publication of application: **21.11.2018**
(21) Application number: 18172641.5
(22) Date of filing: 16.05.2018
(51) Int. Cl.: H02H 9/04

(54) **AEROSPACE LIGHTNING PROTECTION FOR ELECTRICAL DEVICES**

(30) Priority: 16.05.2017 US 201715596490
(71) Applicant: Hamilton Sundstrand Corporation, Charlotte, NC 28217-4578 (US)
(72) Inventor: O'DONNELL, Sean P., Rockford, IL 61104 (US); VANDERGRIFT, Adrian E., Rockton, IL 61072 (US); LEFAVOUR, David W., Machesney Park, IL 61115 (US); FOX, Brennan, Geneseo, IL 61254 (US); KHERALUWALA, Mustansir, Lake Zurich, IL 60047 (US)
(74) Representative: Dehns

(57) **Abstract**

A transient voltage protection circuit. The transient voltage protection circuit including a resistor (106) with a source-side terminal and a device-side terminal, a first stage (102) with a first protection element connected to the resistor device-side terminal, a second stage (104) with a second protection element connected to the resistor source-side terminal, and a ground terminal (20) connected to the resistor source-side terminal through the second stage and to the resistor device-side terminal of the resistor through the first stage (102).

## Description

### BACKGROUND

The present disclosure relates to lightning protection and, in particular, lightning protection for aircraft circuits on an aircraft.

Vehicles, such as aircraft, typically utilize one or more power distribution units to distribute power from a primary power source to various vehicle systems. The units must operate in the presence of lightning, which can adversely impact electronic devices. Traditionally, aircraft have been manufactured with an aluminum skin that distributed lightning energy through the body of the aircraft and attenuated the lightning current induced on the wires connecting the electronic devices to the power distribution. Some aircraft now use composite materials instead of aluminum for weight and strength benefits. However, composite materials do not provide the same level of attenuation to lightning as aluminum. When lightning occurs, hundreds of volts may surge between a load (or, user electronic equipment) in the vehicle system and the aircraft chassis. As such, the lightning protection requirements of power distribution units in particular and aircraft circuits in general have increased.

To withstand operating in such environments, aircraft electric power controllers are subject to lightning testing per regulatory requirements. For low impedance interfaces, one protection method is clamping the threat (lightning) close to the connector pin where the threat may appear. A transient voltage suppressor (TVS) is often used to clamp and suppress these threats. Typical threats are on the order of 100's of volts and/or 100's of amps. A new regulatory requirement of voltage/current threats on the order of 3300V/3300A has been placed on an electronic controller's low impedance circuits and TVS clamping alone is no longer a practical solution to ensure controller circuits are protected.

### SUMMARY

According to one embodiment of the present disclosure, described herein in an embodiment is an electrical voltage and current transient protection circuit for suppression of lightning induced transients in an aircraft, the protection circuit including a resistor with a source-side terminal and a device-side terminal, a first stage with a first protection element connected to the resistor device-side terminal, a second stage with a second protection element connected to the resistor source-side terminal, and a ground terminal connected to the resistor source-side terminal through the second stage and to the resistor device-side terminal of the resistor through the first stage. The second stage defines a single conductive path between the resistor source-side terminal and the ground terminal.

In addition to one or more of the features described above, or as an alternative, further embodiments may include that the first stage defines a conductive path between the resistor device-side terminal and the ground terminal.

In addition to one or more of the features described above, or as an alternative, further embodiments may include that the first protection element comprises a transient voltage suppression diode connected in series between the resistor device-side terminal and the ground terminal.

In addition to one or more of the features described above, or as an alternative, further embodiments may include that the transient voltage suppression diode is arranged to oppose current flow between the resistor device-side terminal and the ground terminal.

In addition to one or more of the features described above, or as an alternative, further embodiments may include that first protection element comprises a voltage clamping silicon device.

In addition to one or more of the features described above, or as an alternative, further embodiments may include that the second protection element comprises a gas discharge tube connected in series between the resistor source-side terminal and the ground terminal.

In addition to one or more of the features described above, or as an alternative, further embodiments may include that the gas discharge tube has a resistor-side terminal and a ground-side terminal separated from one another by a spark gap.

In addition to one or more of the features described above, or as an alternative, further embodiments may include that the spark gap is a single spark gap arranged along the second stage between the resistor source-side terminal and the ground terminal.

In addition to one or more of the features described above, or as an alternative, further embodiments may include that the second protection element comprises a spark gap connected in series between the resistor source-side terminal and the ground terminal.

In addition to one or more of the features described above, or as an alternative, further embodiments may include a protected electrical device with a pin, wherein the pin is connected to the resistor device-side terminal.

In addition to one or more of the features described above, or as an alternative, further embodiments may include that the first stage is connected between the resistor device-side terminal and a protected electrical device connected.

In addition to one or more of the features described above, or as an alternative, further embodiments may include a power source lead connected to the resistor source-side terminal.

In addition to one or more of the features described above, or as an alternative, further embodiments may include that the second stage is connected between the resistor source-side terminal and the power source lead.

Also described herein in an embodiment is a lightning-protected electrical system for an aircraft. The lightning protected electrical system includes an electrical voltage and current transient voltage protection circuit comprising a resistor with a source-side terminal and a device-side terminal, a first stage with a first protection element connected to the resistor device-side terminal, a second stage with a second protection element connected to the resistor source-side terminal, and a ground terminal connected to the resistor source-side terminal through the second stage and to the resistor device-side terminal of the resistor through the first stage. The second stage defines a single conductive path between the resistor source-side terminal and the ground terminal. The first stage defines a conductive path between the resistor device- side terminal and the ground terminal and the first protection element comprises a transient voltage suppression diode connected in series between the resistor device-side terminal, the ground terminal, and the second protection element comprises a gas discharge tube connected in series between the resistor source-side terminal and the ground terminal.

In addition to one or more of the features described above, or as an alternative, further embodiments may include a protected electrical device with a pin, wherein the pin is connected to the resistor device-side terminal, wherein the first stage bus lead is connected between the resistor device-side terminal and the pin of the protected electrical device.

In addition to one or more of the features described above, or as an alternative, further embodiments may include a power source with a power source lead, wherein the power source lead is connected to the resistor source-side terminal, wherein the second stage bus lead is connected between the resistor source-side terminal and the power source lead of the power source.

Also described herein in another embodiment is a method of protecting electrical device having an electrical input on an aircraft. The method including operably connecting a source-side of a protection circuit including a resistor with a source-side terminal to an electrical power connection on the aircraft, operably connecting a device-side of the protection circuit including a device-side terminal of the resistor to the electrical device, operably connecting a first stage with a first protection element to the resistor device-side terminal, operably connecting a second stage with a second protection element connected to the resistor source-side terminal, and operably connecting a ground terminal to the resistor source-side terminal through the second stage and to the resistor device-side terminal of the resistor through the first stage. The second stage defines a single conductive path between the resistor source-side terminal and the ground terminal.

In addition to one or more of the features described above, or as an alternative, further embodiments may include dividing a voltage applied to the source side terminal of the resistor between the resistor and the first protection element.

In addition to one or more of the features described above, or as an alternative, further embodiments may include that the first protection element comprises a transient voltage suppression diode connected between the resistor device-side terminal and the ground terminal to oppose current flow between the resistor device-side terminal and the ground terminal.

In addition to one or more of the features described above, or as an alternative, further embodiments may include that the second stage protection element comprises a gas discharge tube connected between the resistor source-side terminal and the ground terminal.

Additional features and advantages are realized through the techniques of the present disclosure. Other embodiments and aspects of the disclosure are described in detail herein and are considered a part of the claimed disclosure. For a better understanding of the disclosure with the advantages and the features, refer to the description.

### BRIEF DESCRIPTION OF THE DRAWINGS

The subject matter which is regarded as the disclosure is particularly pointed out and distinctly claimed in the claims at the conclusion of the specification. The foregoing and other features, and advantages of the disclosure are apparent from the following detailed description taken in conjunction with the accompanying drawings in which:
FIG. 1 depicts a simplified diagram of an aircraft with an electrical system with a protected electrical load connected to a transient protection circuit in accordance with an embodiment; and
FIG. 2 depicts a partial schematic view of the electrical system of FIG. 1, and transient protection circuit in accordance with an embodiment.

### DETAILED DESCRIPTION

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended. The following description is merely illustrative in nature and is not intended to limit the present disclosure, its application or uses. It should be understood that throughout the drawings, corresponding reference numerals indicate like or corresponding parts and features. As used herein, the term controller refers to processing circuitry that may include an application specific integrated circuit (ASIC), an electronic circuit, an electronic processor (shared, dedicated, or group) and memory that executes one or more software or firmware programs, a combinational logic circuit, and/or other suitable interfaces and components that provide the described functionality.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" are understood to include any integer number greater than or equal to one, i.e. one, two, three, four, etc. The term "a plurality" is understood to include any integer number greater than or equal to two, i.e. two, three, four, five, etc. The term "connection" can include an indirect "connection" and a direct "connection".

As shown and described herein, various features of the disclosure will be presented. Various embodiments may have the same or similar features and thus the same or similar features may be labeled with the same reference numeral, but preceded by a different first number indicating the figure to which the feature is shown. Thus, for example, element "a" that is shown in Figure X may be labeled "Xa" and a similar feature in Figure Z may be labeled "Za." Although similar reference numbers may be used in a generic sense, various embodiments will be described and various features may include changes, alterations, modifications, etc. as will be appreciated by those of skill in the art, whether explicitly described or otherwise would be appreciated by those of skill in the art.

In general, embodiments herein relate generally to an application of combined lightning protection technologies for use in aerospace applications including the use of a conventional transient voltage suppressors (TVS) also commonly known as a transorb and a Gas Discharge Tube (GDT) with reference to ground separated by a resistor. The described application of the described clamping technique is particularly applicable to high voltage/current transients as might be experienced in an aerospace environment.

Typical clamps used in aircraft to protect low impedance aircraft circuits are transient voltage suppressors (TVSs). Typical transient threats are in the range of 100's of volts and/or 100's of amps. In the case of a lightning strike on an aircraft the transients may be much higher and include, for example, voltages that may be as high as 3300V and currents as high as 3300A. In some instances, a circuit (e.g., an aircraft power distribution unit) being protected has a narrow window where the clamping device must not clamp (voltages below the device's hold-off voltage) and the maximum clamping voltage the circuit can tolerate before it is damaged. Standard solutions such as TVSs and MOVs alone are either incapable of dissipating the lightning energy or clamping within the above described narrow window. One or more of the described embodiments may address these conditions and provide an improved transient suppression solution. The systems and methods described herein can be used for protecting electronics in aerospace applications, though the described embodiments are not limited to aircraft and aircraft electronics in general.

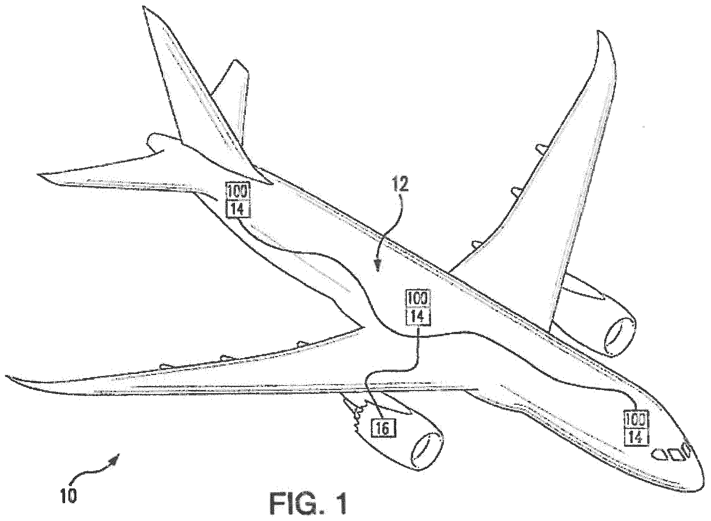

Referring to FIG. 1, an aircraft 10 is shown. Aircraft 10 includes a lightning-protected electrical system 12. Electrical system 12 interconnects one or more protected electrical devices 14 with a power source 16. Protection for the one or more electrical devices 14 is provided by transient voltage protection circuits 100 connected to respective electrical devices 14 at their low impedance interfaces.

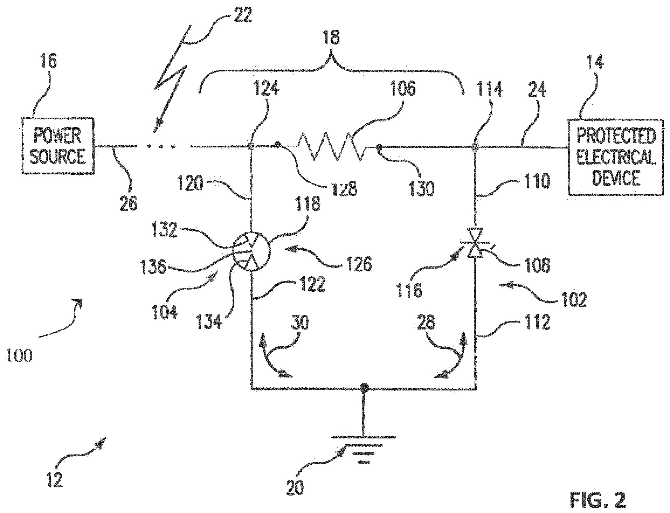

With reference to FIG. 2, electrical system 12 is shown. As will be appreciated by those of skill in the art in view of the described embodiments, electrical system 12 can be subject to electrical transients. Electrical transients can result from electromagnetic interference from devices like motors, generators, relays and the like with the electrical devices 14 in the electrical system 12. Electrical transients can also be introduced by external sources, such a as ground power. Moreover, electrical transients may be introduced by external electrical disturbances such as lightning, as indicated by reference numeral 22. These transient voltages and transient currents are readily transmitted from along a low impedance bus segment 18 to the electrical device 14. In an embodiment, a transient voltage protection circuit 100 is arranged at the interface of bus segment 18 and electrical device 14 to protect electrical device 14 from the energy associated with lightning 22. In embodiments as described herein, it is contemplated that transient voltage protection circuit 100 provides protection to electrical device 14 for transients of about 3300 volts/3300 amperes or greater.

In an embodiment, transient voltage protection circuit 100 includes a first stage 102 and a second stage 104. First stage 102 and second stage 104 are connected electrically in parallel with one another between bus segment 18 of electrical system 12 and a ground terminal 20 of electrical system 12. A resistor 106 is connected along bus segment 18 between first stage 102 and second stage 104 to increase the voltage applied to the second stage 104 by adding to the voltage developed across the first stage 102, upon application of a transient to bus segment 18.Resistor 106 includes a source-side terminal 128 and a device-side terminal 130. A pin 24 connects electrical device 14 to device-side terminal 130. First stage 102 is connected between device-side terminal 130 and pin 24 of electrical device 14 at a terminal 114. Between terminal 114 and ground terminal 20, first stage 102 defines a single conductive path to ground terminal 20, i.e., with no parallel electrical path(s) extending between first stage 102 and ground terminal 20.

A source lead 26 connects a power source 16 to source-side terminal 128 of resistor 106. Second stage 104 is connected between the source-side terminal 128 and a source lead 26 of power source 16. Second stage 104 connects between source lead 26 and source-side terminal 128 at a terminal 124. Between terminal 124 and ground terminal 20 second stage 104 defines a single conductive path to ground terminal 20, i.e., with no parallel electrical path(s) extending from second stage 104 to ground terminal 20.

First stage 102 includes a first stage protection element 108. First stage protection element 108 is connected in series between a bus lead 110 and a ground lead 112 of first stage 102. Bus lead 110 connects first stage protection element 108 to bus segment 18 at a terminal 114. Ground lead 112 connects first stage protection element 108 with ground terminal 20. First stage protection element 108 includes, but is not limited to a voltage suppression device 116.

In an embodiment the voltage suppression device 116 is a voltage clamping silicon device. Further, the voltage suppression device 116 may be a bidirectional transient voltage suppression (TVS) diode arranged to conduct current 28 between bus lead 110 and ground lead 112 upon application of a voltage potential above a breakdown voltage V₀ of voltage suppression device 116. It is contemplated that in some embodiments, voltage suppression device 116 may be a transorb-type device, thyristor, triac, diac metal oxide varistor, avalanche diodes, and the like.

Second stage 104 includes a second stage protection element 118. Second stage protection element 118 is connected in series between a bus lead 120 and a ground lead 122. Bus lead 120 connects second stage protection element 118 to bus segment 18 at a terminal 124. Ground lead 122 connects second stage protection element 118 with ground terminal 20. Second stage protection element 118 includes a voltage breakdown device. In an embodiment the second stage protection element 118 is a crow-bar type device such as a gas discharge tube 126. In another embodiment, the second stage protection device 118 could be any type of spark gap device.

Gas discharge tube 126 includes a resistor-side terminal 132 and a ground-side terminal 134. Resistor-side terminal 132 is separated from ground-side terminal 134 by a spark gap 136. In the illustrated exemplary embodiment spark gap 136 is a single spark gap, meaning that bus lead 120 defines an electrically continuous conductor extending between resistor-side terminal 132 and terminal 124 and ground lead 122 defines an electrically continuous conductor extending between ground-side terminal 134 and ground terminal 20.

In this respect resistor-side terminal 132 of gas discharge tube 126 connects directly a source-side terminal 128 of resistor 106, and ground-side terminal 134 of gas discharge tube 126 connects directly to ground terminal 20. Upon application of a voltage potential greater than a predetermined spark over voltage across the spark gap 136 in the gas discharge tube 126 formed between the resistor-side terminal 132 and ground-side terminal 134, gas discharge tube 126 conducts current 30 between bus lead 120 and ground lead 122.

As will be appreciated by those of skill in the art in view of the described embodiments, various voltage suppression devices typically begin conducting at different times upon and exhibit different breakdown characteristics. In particular, a transient voltage suppression diode and gas discharge tube generally begin conducting at different times when subjected to the same transient voltage, above the breakdown voltage of the transient voltage suppression diode and spark over voltage of the gas discharge tube. In this respect the transient suppression diode typically begins conducting prior to the gas discharge tube. Therefore, the transient voltage suppression diode is forced to bear the full voltage stress of a voltage transient for the brief duration prior to the gas discharge tube sparking over and conducting as well. Below a certain transient threshold, this difference is typically not of significant concern. However, with respect to larger transients, e.g., at about 3300 volts/3300 amps or higher, the energy absorbed by the transient voltage suppression diode during the delay interval can potentially damage the transient voltage suppression diode before the gas discharge tube initiates sparking over. Accordingly, a transient voltage suppression diode of relatively large size may be required to accommodate such transients.

In an embodiment, described herein is an alternative means for addressing and operating with the above mentioned delay without requiring a larger transient voltage suppression diode. Continuing with FIG. 2 now, upon application of a transient voltage, as the transient voltage suppression device 116, in this instance a transient voltage suppression diode, begins to conduct current 28 that current also passes through resistor 106. The current 28 develops a voltage across resistor 106, which combined with the voltage applied to the transient voltage suppression diode of voltage suppression device 116.adds to the voltage applied to the gas discharge tube 126. In other words, the sum of the voltage across the resistor 106 and the voltage developed across the transient voltage suppression device 116 is applied across the gas discharge tube 126. In this respect the voltage transient causes resistor 106 to decrease the voltage applied at terminal 114 relative to that applied to 124. As the voltage applied at terminal 124 continues to increase, it causes gas discharge tube 126 to spark over. The delay interval identified above between transient voltage suppression diode of voltage suppression device 116 beginning to conduct and gas discharge tube 126 beginning to conduct is constrained. The reduced impact of the delay interval reduces the peak voltage stress exerted on transient voltage suppression diode of voltage suppression device 116 by the transient event, enabling reduction of the size of transient voltage suppression diode of voltage suppression device 116 for a given transient protection rating or increasing the transient voltage protection of transient voltage protection circuit 100. Moreover, as gas discharge tube 126 is connected directly to ground terminal 20, gas discharge tube 126 presents a relatively low impedance path to ground for the transient, thereby reducing the peak voltage (or current flow) associated with the transient.

The methods and systems of the present disclosure, as described above and shown in the drawings, provide for transient voltage protection circuits that may tolerate electrical transients greater than those typically required for aircraft certification, e.g., about 3300 volts/3300 amperes or greater. It will be appreciated that the advantages of one or more of the described embodiments address the concerns protecting electrical circuits from high voltage/high current transients, typically as induced by lightning. Advantageously the described embodiments permit the use of simple and lower cost components. In particular the described embodiments avoid the use of costly large sized magnetics or larger transient suppression diodes that have been employed in conventional transient suppression for such high voltages and currents. Moreover, use of a series resistor as described herein avoids undesirable dynamic effects associated with such large current and voltage transients.

While the apparatus and methods of the subject disclosure have been shown and described with reference to described embodiments, those skilled in the art will readily appreciate that changes and/or modifications may be made thereto without departing from the scope of the subject disclosure, the claims which follow, or that in an application that claims the benefit of this application.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one more other features, integers, steps, operations, element components, and/or groups thereof. For the purposes of this disclosure, it is further understood that the terms "inboard" and "outboard" can be used interchangeably, unless context dictates otherwise.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The embodiment was chosen and described in order to best explain the principles of the disclosure and the practical application, and to enable others of ordinary skill in the art to understand the disclosure for various embodiments with various modifications as are suited to the particular use contemplated.

## Claims

1. An electrical voltage and current transient protection circuit (100) for suppression of lightning induced transients in an aircraft, the protection circuit comprising;
a resistor (106) with a source-side terminal and a device-side terminal;
a first stage (102) with a first protection element connected to the resistor device-side terminal;
a second stage (104) with a second protection element connected to the resistor source-side terminal; and
a ground terminal (20) connected to the resistor source-side terminal through the second stage and to the resistor device-side terminal of the resistor through the first stage,
wherein the second stage (104) defines a single conductive path between the resistor source-side terminal and the ground terminal.

2. The transient protection circuit as recited in claim 1, wherein the first stage (102) defines a conductive path between the resistor device-side terminal and the ground terminal.

3. The transient protection circuit as recited in claim 1 or 2, wherein the first protection element comprises a transient voltage suppression diode connected in series between the resistor device-side terminal and the ground terminal.

4. The transient protection circuit as recited in claim 3, wherein the transient voltage suppression diode is arranged to oppose current flow between the resistor device-side terminal and the ground terminal (20).

5. The transient protection circuit as recited in any preceding claim, wherein first protection element comprises a voltage clamping silicon device.

6. The transient protection circuit as recited in any preceding claim, wherein the second protection element comprises a gas discharge tube (126) connected in series between the resistor source-side terminal and the ground terminal (120).

7. The transient protection circuit as recited in claim 6, wherein the gas discharge tube (126) has a resistor-side terminal and a ground-side terminal separated from one another by a spark gap (136).

8. The transient protection circuit as recited in any preceding claim, wherein the second protection element comprises a spark gap (136) connected in series between the resistor source-side terminal and the ground terminal (20).

9. The transient protection circuit as recited in any preceding claim, further comprising a protected electrical device with a pin, wherein the pin (24) is connected to the resistor device-side terminal.

10. The transient protection circuit as recited in claim 9, wherein the first stage (102) is connected between the resistor device-side terminal and a protected electrical device connected.

11. The transient protection circuit as recited in any preceding claim, further comprising a power source lead connected to the resistor source-side terminal.

12. The transient protection circuit as recited in claim 11, wherein the second stage (104) is connected between the resistor source-side terminal and the power source lead.

13. A method of protecting electrical device having an electrical input on an aircraft (10) comprising:
operably connecting a source-side of a protection circuit including a resistor (106) with a source-side terminal to an electrical power connection on the aircraft (10);
operably connecting a device-side of the protection circuit including a device-side terminal of the resistor (106) to the electrical device;
operably connecting a first stage with a first protection element to the resistor (106) device-side terminal;
operably connecting a second stage with a second protection element connected to the resistor source-side terminal; and
operably connecting a ground terminal to the resistor source-side terminal through the second stage and to the resistor device-side terminal of the resistor through the first stage (102),
wherein the second stage (104) defines a single conductive path between the resistor (106) source-side terminal and the ground terminal (20).

14. The method of protecting electrical device as recited in claim 13, further including dividing a voltage applied to the source side terminal of the resistor (106) between the resistor (106) and the first protection element.

15. The method of protecting electrical device as recited in claim 13 or 14, wherein the first protection element comprises a transient voltage suppression diode connected between the resistor device-side terminal and the ground terminal to oppose current flow between the resistor device-side terminal and the ground terminal (20).
